# FASCICULE DE BREVET EUROPEEN

(11) **EP 3 097 972 B1**
(45) Date de publication et mention de la délivrance du brevet: **06.06.2018**
(21) Numéro de dépôt: 16171417.5
(22) Date de dépôt: 25.05.2016
(51) Int. Cl.: B01F 3/08, B01F 15/04, B01F 13/10, G05D 11/13

(54) **UNITÉ DE FABRICATION DE MÉLANGES TITRES ET PROCÉDÉ D'UTILISATION DE LA DITE UNITÉ**
HERSTELLUNGSEINHEIT VON TITRIERTEN MISCHUNGEN UND VERFAHREN IHRER VERWENDUNG
UNIT FOR MANUFACTURING TITRATED MIXTURES AND METHOD OF USE OF SAID UNIT

(30) Priorité: 26.05.2015 FR 1554706
(43) Date de publication de la demande: 30.11.2016
(73) Titulaire: Phode Sciences, 81150 Terssac (FR)
(72) Inventeur: ECLACHE, Daniel, 81990 PUYGOUZON (FR); ETIENNE, Pierre, 81120 LOMBERS (FR)
(74) Mandataire: Cabinet Morelle & Bardou SC

(56) Documents cités:
- EP-A1- 0 490 790
- JP-A- S63 258 629

## Description

### DOMAINE TECHNIQUE

La présente invention se rapporte de manière générale au domaine de la production de mélanges titrés.

Elle concerne plus particulièrement une unité de fabrication de mélanges titrés, et un procédé d'utilisation d'une telle unité de fabrication.

### ARRIERE-PLAN TECHNOLOGIQUE

Des mélanges titrés sont par exemple des compositions liquides titrées, c'est-à-dire de compositions liquides comprenant une base de matière liquide avec un dosage déterminé d'au moins une autre matière, dangereuse ou non.

De façon non exhaustive, des exemples de telles compositions liquides titrées peuvent être des liquides à vaporiser destinés à la cigarette électronique (e-liquides), des substances liquides pharmaceutiques, cosmétiques ou chimiques, par exemple pour des produits de santé ou de bien-être, etc.

### ART ANTERIEUR

L'élaboration de certains produits industriels ou commerciaux nécessite de disposer de pré-mélanges liquides qui sont incorporés ensuite dans ces produits, à un niveau particulier de la chaîne d'étapes de leur élaboration. De tels pré-mélanges sont utilisés notamment pour élaborer des recharges liquides pour cigarettes électroniques, pour fabriquer des produits alimentaires, des compositions pharmaceutiques, cosmétiques, chimiques, etc.

Or pour des raisons de sécurité en particulier, la fabrication de ces pré-mélanges peut être soumise à des restrictions, notamment en ce qui concerne les conditions de stockage des composants séparés qui vont former chaque pré-mélange, la durée de stockage des pré-mélanges avant leur utilisation ou leur conditionnement, le transport des pré-mélanges déjà fabriqués, etc.

Par ailleurs, certaines applications des pré-mélanges requièrent qu'ils soient fabriqués en appliquant des procédures de mesures multiples pour les concentrations qui sont effectivement produites dans chaque pré-mélange.

Enfin, en fonction de l'organisation de la chaîne d'élaboration du produit final auquel participe un pré-mélange, il peut être nécessaire que ce pré-mélange soit fabriqué en petites quantités, à la demande, juste avant d'être fourni à un transformateur, un conditionneur ou un détaillant.

Le document EP-A-0 490 790 décrit une unité de fabrication selon le préambule de la revendication 1.

### RESUME DE L'INVENTION

La présente invention a pour but de répondre à certains au moins de ces besoins de sécurité et sûreté.

A cet effet, un premier aspect de l'invention propose une unité de fabrication de mélanges titrés, pour mélanger au moins un premier composant liquide avec au moins un second composant liquide, l'unité comprenant :
plusieurs cuves de mélanges qui sont munies chacune d'une sortie de soutirage respective ;
pour chaque premier composant :
   - une cuve de stockage qui peut être thermo-régulée et qui est dédiée à ce premier composant ;
   - une cuve de pesée intermédiaire qui peut aussi être thermo-régulée et qui est aussi dédiée à ce premier composant, qui est montée sur un dispositif de pesée intermédiaire, ce dispositif étant adapté pour déterminer des variations de poids d'un contenu de la cuve de pesée intermédiaire ;
   - des moyens de pompage à double sens, qui sont agencés pour transférer du premier composant entre la cuve de stockage et la cuve de pesée intermédiaire dédiées au même premier composant ; et
   - un ensemble de premières canalisations qui est capable de transférer un contenu de la cuve de pesée intermédiaire dédiée au premier composant sélectivement vers chaque cuve de mélange;
et pour chaque second composant :
   - une cuve de stockage qui peut être thermo-régulée et qui est dédiée à ce second composant ; et
   - un ensemble de secondes canalisations qui est capable de transférer des quantités du second composant à partir de la cuve de stockage dédiée à ce second composant sélectivement vers chaque cuve de mélange. Selon l'invention, l'unité de fabrication de mélange titrés est adaptée pour que les cuves de mélanges soient dédiées respectivement à des concentrations différentes du ou d'un des premiers composants dans les mélanges. En outre, les cuves de mélanges sont disposées à des distances d'éloignement respectives par rapport à la cuve de pesée intermédiaire de ce premier composant, de sorte que ces distances d'éloignement des cuves de mélanges croissent en fonction des concentrations du premier composant dans les mélanges.

Or, une erreur de jetée pour le premier composant, définie comme la différence entre une quantité de ce premier composant qui est voulue pour être transférée entre deux cuves, et la quantité qui est réellement transférée, est fonction de la longueur et de la pente de la canalisation qui relie les deux cuves et par laquelle le premier composant est transféré. Cette erreur de jetée est donc minimale pour celle des cuves de mélanges qui est la plus proche de la cuve de pesée intermédiaire du premier composant, et maximale pour celle des cuves de mélanges qui est la plus éloignée de la cuve de pesée intermédiaire du même premier composant. Les erreurs de jetée du premier composant sont alors minimisées globalement par l'invention, en valeurs relatives lorsque chacune d'elles est rapportée à la concentration du premier composant dans le mélange concerné.

Par ailleurs, lorsque ce premier composant présente certains risques de manipulation et de stockage, éloigner les parties de l'unité de fabrication qui concernent exclusivement ce premier composant, de la cuve de mélange dans laquelle la concentration en premier composant est la plus élevée, contribue à améliorer la sécurité globale de l'unité de fabrication de mélanges.

Dans des modes préférés de réalisation de l'invention, un des perfectionnements suivants peut être utilisé avantageusement, seul ou en combinaison avec d'autres :
- chaque cuve de mélange qui peut être thermo-régulée et peut aussi être montée sur un dispositif de pesée étalonnable, pour déterminer des variations de poids d'un contenu de cette cuve de mélange. De tels dispositifs de pesée des cuves de mélanges permettent de mesurer ou vérifier les quantités des composants qui sont transférées, en plus des mesures qui sont fournies par des moyens commandés qui provoquent les transferts, ou par le dispositif de pesée de chaque cuve de pesée intermédiaire ;
- l'unité de fabrication de mélanges titrés peut être adaptée pour être installée à bord d'un véhicule, afin de former une unité mobile de fabrication de mélanges titrés. Des pré-mélanges peuvent ainsi être fabriqués à la demande par déplacement de l'unité sur le site de l'utilisateur, du conditionneur ou du détaillant de ces pré-mélanges, et avec des délais réduits ;
- l'unité de fabrication de mélanges titrés peut comprendre en outre un compartiment étanche équipé de rétention, qui est adapté pour contenir des fuites de premier composant et éventuellement pour être ventilé. Dans ce cas, chaque cuve de stockage de premier composant, chaque cuve de pesée intermédiaire, les premières canalisations et chaque cuve de mélange sont alors contenues dans ce compartiment. Les mesures de sécurité prescrites pour la manipulation de chaque premier composant peuvent ainsi être respectées ;
- l'unité de fabrication de mélanges titrés peut comprendre au moins un témoin de niveau ou une sonde de niveau qui est située à l'intérieur du compartiment étanche équipé de rétention, qui est disposée pour montrer un niveau de remplissage d'une des cuves, et qui est visualisable à partir d'un poste de supervision situé à l'extérieur du compartiment étanche équipé de rétention. Alternativement, le témoin ou sonde de niveau peut être visualisable à l'aide d'un système vidéo qui est agencé pour la surveillance générale du compartiment et du contenu des cuves, encore à partir d'un poste de supervision qui est situé à l'extérieur du compartiment étanche équipé de rétention. Grâce à une telle disposition ou un tel système, il n'est pas nécessaire qu'un opérateur pénètre dans le compartiment pour lire le témoin ou sonde de niveau, ni pour vérifier l'état général du compartiment et des cuves, si bien que des risques de contact ou d'exposition de l'opérateur au(x) premier(s) composant(s) sont évités ;
- chaque cuve de stockage de second composant peut être située à l'extérieur du compartiment étanche équipé de rétention. Ainsi, le volume du compartiment est minimisé, pour faciliter des opérations de vidage, de nettoyage de ce compartiment et d'inertage au gaz neutre ;
- certaines au moins des premières et secondes canalisations peuvent être équipées de systèmes de contrôle thermique, capables de maintenir ces canalisations à des températures fixes. De cette façon, des fluctuations thermiques involontaires, susceptibles de perturber le contrôle des quantités de composants qui sont transférées, sont supprimées ;
- chaque cuve de pesée intermédiaire, et éventuellement aussi chaque cuve de mélange, peut être munie d'un fond de cuve incliné pour permettre un soutirage complet par gravité d'un contenu de cette cuve, sans quantité restante dans la cuve ; et
- chaque ensemble de secondes canalisations peut comprendre une pompe qui est dédiée séparément au second composant correspondant, et qui est adaptée pour être contrôlée en fonction de quantités de ce second composant à transférer vers l'une des cuves de mélanges.

Un second aspect de l'invention propose en outre un procédé d'utilisation d'une unité fabrication de mélanges titrés, pour lequel l'unité fabrication de mélanges titrés est conforme au premier aspect de l'invention tel que décrit ci-dessus.

Avantageusement, chaque quantité de premier ou second composant qui est transférée entre deux des cuves peut être mesurée au moins deux fois, par pesées indépendantes des deux cuves, ou par pesée d'une des deux cuves et par mesure de la quantité au niveau d'une pompe ayant transféré cette quantité, ou par pesée d'une des deux cuves et par visualisation d'un témoin de niveau ou d'une sonde de niveau pour l'autre des deux cuves.

Possiblement, le procédé peut être mis en oeuvre pour fabriquer des pré-mélanges liquides pour cigarettes électroniques. Dans ce cas, un premier composant peut comprendre un composé nicotinique, et deux seconds composants peuvent comprendre respectivement du propane-1,2-diol et du propane-1,2,3-triol. Quatre cuves de mélanges peuvent alors être utilisées, pour produire séparément des mélanges selon quatre valeurs différentes de titrage en composé nicotinique.

Alternativement, le procédé de l'invention peut être mis en oeuvre dans le but de fabriquer des mélanges et des pré-mélanges aromatiques liquides pour la consommation alimentaire humaine ou animale, ou pour fabriquer des pré-mélanges ou des mélanges pharmaceutiques, cosmétiques ou chimiques.

### BREVE DESCRIPTION DES DESSINS

D'autres particularités et avantages de la présente invention apparaîtront dans la description ci-après d'un exemple de réalisation non limitatif, en référence à l'unique figure introduite maintenant :

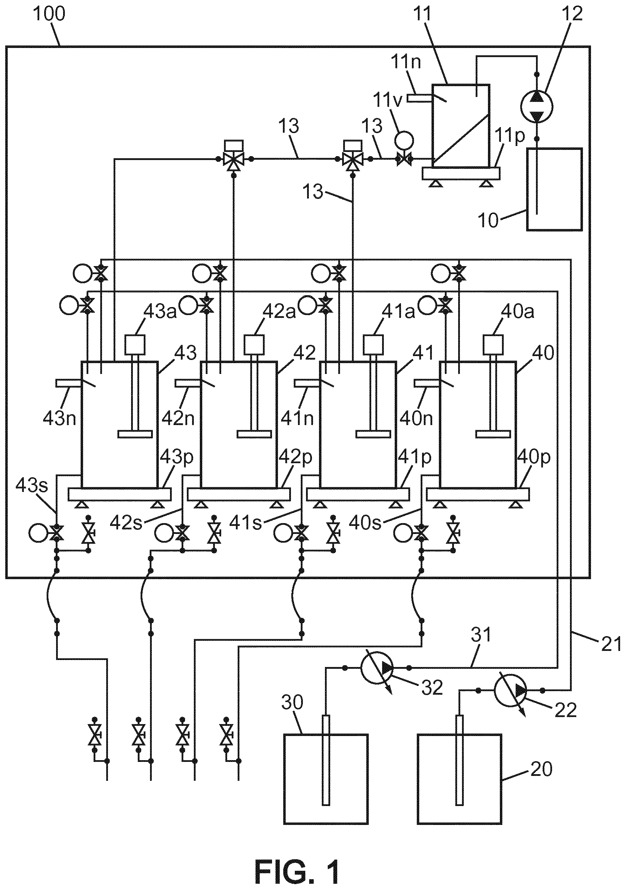

- la Figure 1 est un schéma fonctionnel d'une unité de fabrication de mélanges titrés conforme à la présente invention.

### DESCRIPTION DETAILLEE DE MODES DE REALISATION

Pour raison de clarté, les dimensions des éléments qui sont représentés à la Figure 1 ne correspondent ni à des dimensions réelles ni à des rapports de dimensions réels. En outre, à titre d'exemple, la Figure 1 correspond au cas de mélanges qui sont élaborés à partir d'un seul premier composant et de deux seconds composants. Dans le cas particulier de la fabrication de pré-mélanges liquides pour cigarettes électroniques, le premier composant peut comprendre un composé nicotinique en phase liquide, tel que de la nicotine, l'un des seconds composants peut comprendre du glycérol, ou glycérine, en phase liquide, et l'autre second composant peut comprendre du MPG aussi en phase liquide.

Les références qui sont indiquées dans la figure ont les significations suivantes :
10 cuve de stockage du composé nicotinique
11 cuve de pesée intermédiaire dédiée au composé nicotinique
11p dispositif de pesée de la cuve de pesée intermédiaire 11
11n témoin de niveau ou sonde de niveau de la cuve de pesée intermédiaire 11
11v vanne de sortie de la cuve de pesée intermédiaire 11
12 pompe à double sens, reliant la cuve de stockage 10 à la cuve de pesée intermédiaire 11, par exemple du type pompe volumétrique
20 resp. 30 cuve de stockage du glycérol, respectivement du MPG
40-43 quatre cuves de mélanges
40s-43s lignes de soutirage respectives des cuves de mélanges 40-43, pour prélever des quantités de chaque mélange
40a-43a systèmes d'agitation ou mélangeurs, respectivement pour les cuves de mélanges 40-43
40n-43n témoins de niveau ou sondes de niveau, respectivement pour les cuves de mélanges 40-43
40p-43p dispositifs de pesées, par exemple du type pesons ou balances électroniques, respectivement dédiés aux cuves de mélanges 40-43
13 ensemble de canalisations reliant la cuve de pesée intermédiaire 11 aux cuves de mélanges 40-43
21 resp. 31 ensembles de canalisations reliant la cuve de stockage 20, respectivement 30, aux cuves de mélanges 40-43
22 resp. 32 pompes de transfert dédiées respectivement aux cuves de stockage 20 et 30, par exemple du type pompes volumétriques
100 compartiment étanche équipé de rétention de fluide

La figure 1 montre en outre d'autres vannes et des robinets dont la disposition est évidente pour l'Homme du métier, et n'est donnée qu'à titre d'exemple. Ces autres vannes et robinets ne sont pas indispensables à l'invention, mais en facilitent l'utilisation.

La pompe à double sens 12 peut être asservie en fonction du poids de composé nicotinique qui est contenu dans la cuve de pesée intermédiaire 11, et qui est mesuré par le dispositif de pesée 11p, par rapport à un poids cible de composé nicotinique à transférer vers l'une de cuves de mélanges 40-43.

Préférablement, la vanne de sortie 11v, qui est optionnelle, est située juste à la sortie de la cuve de pesée intermédiaire 11.

Les quatre cuves de mélanges 40-43 peuvent être dédiées à quatre concentrations du composé nicotinique dans les mélanges, par exemple 0 mg/mL (milligramme par millilitre), 6 mg/mL, 12 mg/mL et 18 mg/mL. Ces concentrations sont alors affectées aux cuves 40-43 dans l'ordre croissant : le mélange à titrage de 0 mg/mL en composé nicotinique est réalisé dans la cuve 40, le mélange à titrage de 6 mg/mL en composé nicotinique est réalisé dans la cuve 41, le mélange à titrage de 12 mg/mL en composé nicotinique est réalisé dans la cuve 42, et le mélange à titrage de 18 mg/mL en composé nicotinique est réalisé dans la cuve 43. Simultanément, les cuves de mélanges 40 à 43 sont situées dans cet ordre à des distances d'éloignement croissantes mesurées à partir de la cuve de pesée intermédiaire 11. Autrement dit, la cuve de mélange 40 est la plus proche de la cuve de pesée intermédiaire 11, et la cuve de mélange 43 en est la plus éloignée. Ainsi, les concentrations en composé nicotinique des mélanges qui sont contenus séparément dans les cuves 40-43, croissent en fonction des distances d'éloignement qui existent entre chacune de ces cuves de mélanges 40-43 et la cuve de pesée intermédiaire 11. De cette façon, l'erreur de jetée qui concerne le composé nicotinique, et qui est proportionnelle à la longueur des canalisations 13 à partir de la cuve de pesée intermédiaire 11, séparément jusqu'à chacune des cuves de mélanges 40-43, est la moins importante pour le mélange dont le titrage en composé nicotinique est le plus bas. Ainsi, l'erreur relative de jetée, par rapport à chaque titrage de mélange, reste limitée.

Les systèmes d'agitation ou mélangeurs 40a-43a peuvent être du type mélangeur statique, ou agitateur rotatif ou agitateur par balancement de chaque cuve. Lorsqu'il s'agit d'agitateurs rotatifs ou par balancement, ils peuvent être avantageusement ralentis ou arrêtés pendant qu'une mesure de poids est réalisée pour la cuve correspondante.

Les témoins ou sondes de niveau 11n et 40n-43n peuvent être de toute technologie connue : tube de niveau transparent, sonde à résistance électrique variable, sonde optique, sonde à effet Hall, sonde à ultrasons, etc. Un système vidéo (non représenté) ou d'affichage à distance peut permettre de voir les résultats de mesures qui sont produits par chaque témoin ou sonde de niveau 11n, 40n-43n depuis l'extérieur du compartiment étanche équipé de rétention 100.

Chacun des ensembles de canalisations 13, 21 et 31 peut être muni de vannes, et/ou d'au moins un système de mesure des quantités transférées, et/ou d'un système de contrôle thermique pour maintenir chaque canalisation à une température fixe. Le contrôle thermique de certaines au moins des canalisations permet de supprimer des variations thermiques involontaires, susceptibles d'altérer notamment la densité et/ou la viscosité des composants liquides qui sont transférés.

Chaque ligne de soutirage 40s-43s peut être munie d'au moins un système de purge et/ou d'au moins un robinet de fermeture, d'une façon connue de l'Homme du métier.

Les cuves 10, 11 et 40-43, la pompe 12 ainsi que l'ensemble de canalisations 13 sont placés à l'intérieur du compartiment étanche équipé de rétention 100. De cette façon, des quantités du composé nicotinique qui s'échapperaient involontairement de l'une de ces cuves, pompe ou canalisations, sont retenues dans le compartiment 100, pour être évacuées ultérieurement dans des conditions appropriées. En outre, le compartiment 100 peut être muni éventuellement d'un système de ventilation (non représenté), pour évacuer des vapeurs du composé nicotinique qui seraient contenues dans ce compartiment. Ainsi, un opérateur de l'unité de fabrication des pré-mélanges est préservé de tout contact avec le composé nicotinique, pour garantir sa sécurité. Eventuellement aussi, le compartiment 100 peut être coupe-feu, ou équipé d'un système d'inertage par gaz neutre ou tout autre système adéquat, pour empêcher la propagation de flammes et de fluides en combustion entre l'intérieur et l'extérieur du compartiment. Ces équipements peuvent alors respecter la réglementation ATEX. Sans nécessité spécifique de sécurité, les cuves de stockage 20 et 30 sont préférablement situées à l'extérieur du compartiment 100.

Typiquement, le compartiment étanche équipé de rétention, qui peut en outre être régulé en température et en hygrométrie, 100 peut avoir les dimensions 2,0 m (longueur) x 1,0 m (largeur) x 1,5 m (hauteur). Il peut donc être chargé facilement à l'arrière d'une voiture fourgonnette ou d'un camion de livraison, avec les réservoirs de stockage 20 et 30 qui sont externes au compartiment 100.

Avantageusement, le fond de la cuve de pesée intermédiaire 11 peut être incliné, et l'ensemble de canalisations 13 peut être connecté à ce fond en un point de soutirage qui est situé le plus bas possible, pour permettre un vidage complet de la cuve 11 par gravité. Une configuration identique de fond incliné et de ligne de soutirage qui est connectée au point le plus bas du fond peut aussi être utilisée pour chacune des cuves de mélanges 40-43.

De façon encore plus avantageuse, la cuve de pesée intermédiaire 11 peut être située au-dessus des cuves de mélanges 40-43, si bien que l'écoulement de composé nicotinique à partir de la cuve 11 jusque dans chacune des cuves 40-43, est mû par gravité. Les quantités transférées peuvent ainsi correspondre plus précisément aux valeurs cibles déterminées pour celles-ci. De même les lignes de soutirage 40s-43s sont préférablement conçues pour produire des écoulements gravitaires de soutirage.

On décrit maintenant une façon d'utiliser l'unité de fabrication de la figure 1, à titre d'illustration.

Les cuves de stockage 11, 20 et 30 sont d'abord chacune remplies au moins partiellement avec le composé correspondant, à partir de réserves externes.

Des quantités voulues de MPG peuvent d'abord être transférées de la cuve de stockage 30 dans chacune des cuves de mélanges 40-43. Chaque quantité transférée de MPG peut être mesurée et vérifiée de plusieurs façons, par exemple par lecture de l'augmentation du poids et/ou du niveau de remplissage de la cuve de mélange 40-43 à laquelle chaque quantité de MPG est destinée, et/ou par contrôle au niveau de la pompe 32.

Puis des quantités voulues de glycérol peuvent être transférées de la cuve de stockage 20 dans chacune des cuves de mélanges 40-43. De même, chaque quantité transférée de glycérol peut être mesurée et vérifiée de plusieurs façons, par exemple par lecture de l'augmentation du poids et/ou du niveau de remplissage de la cuve de mélange 40-43 à laquelle chaque quantité de glycérol est destinée, et/ou par contrôle au niveau de la pompe 22.

Enfin, la quantité de composé nicotinique qui est destinée au mélange de la cuve 43, titré à 18 mg/mL, peut être transférée de la cuve de stockage 10 à la cuve de pesée intermédiaire 11. Cette quantité de composé nicotinique qui est transférée peut être mesurée et vérifiée par lecture de l'augmentation du poids et/ou du niveau de remplissage de la cuve de pesée intermédiaire 11, et/ou par contrôle au niveau de la pompe 12. Cette quantité est ensuite entièrement transférée de la cuve de pesée intermédiaire 11 à la cuve de mélange 43, possiblement en vérifiant encore l'augmentation correspondante du poids ou du niveau de remplissage de la cuve 43.

Le même procédé de transfert du composé nicotinique est ensuite utilisé pour compléter les mélanges des cuves 42 puis 41.

Il est entendu que l'invention peut être reproduite en modifiant certains détails par rapport à la description détaillée ci-dessus, tout en conservant certains au moins des avantages qui ont été cités. Parmi les modifications possibles, les suivantes sont citées à fin d'exemples non-exhaustifs :
- le nombre de cuves de stockage peut être varié, pour les cuves qui sont situées à l'intérieur du compartiment étanche équipé de rétention 100 aussi bien que pour celles qui sont situées à l'extérieur de ce compartiment ;
- le nombre de cuves de mélanges peut être varié ;
- les dispositifs de mesure des quantités de composants qui sont transférées entre les cuves de stockage et les cuves de mélanges, peuvent être adaptés ; et
- la conception des ensembles de canalisations peut être modifiée.

Enfin, les principaux avantages de l'invention sont aussi rappelés :
- les erreurs de jetée du composé nicotinique sont minimisées globalement en valeurs relatives par rapport aux concentrations de ce composé dans les mélanges ;
- l'unité de fabrication des mélanges permet que des conditions de sécurité soient satisfaites, à la fois pour l'opérateur et pour l'environnement, lorsque certains des composants sont toxiques, dangereux ou polluants ;
- l'unité de fabrication des mélanges permet de fabriquer des mélanges rapidement et à la demande ;
- elle peut être facilement automatisée ;
- elle permet des vérifications multiples pour les titrages réalisés ;
- elle peut être mobile ;
- elle est modulaire pour pouvoir être modifiée simplement, en fonction de nombres de cuves variables ;
- le nombre d'opérateurs nécessaires à son utilisation peut être réduit à un seul opérateur ;
- tous les composants chimiques peuvent n'être transférés entre cuves que dans un seul sens d'écoulement ; et
- l'entretien et les lavages de l'unité de fabrication de mélanges sont réduits au minimum, grâce à des cuves et des canalisations qui sont dédiées à chaque composant et à chaque titrage de mélange.

La présente invention a été décrite et illustrée dans la présente description détaillée et dans la Figure 1. L'invention ne se limite pas, toutefois, aux formes de réalisation présentées. D'autres variantes et modes de réalisation peuvent être déduits et mis en oeuvre par la personne du métier à la lecture de la présente description et des dessins annexés.

Dans les revendications, le terme "comprendre" n'exclut pas d'autres éléments ou d'autres étapes. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Unité de fabrication de mélanges titrés, pour mélanger au moins un premier composant liquide avec au moins un second composant liquide, comprenant :
plusieurs cuves de mélanges (40-43) munies chacune d'une sortie de soutirage respective (40s-43s) ;
pour chaque premier composant :
- une cuve de stockage (10) dédiée audit premier composant ;
- une cuve de pesée intermédiaire (11) dédiée audit premier composant, montée sur un dispositif de pesée intermédiaire (11p), adapté pour déterminer des variations de poids d'un contenu de ladite cuve de pesée intermédiaire ;
- des moyens de pompage à double sens (12), agencés pour transférer du premier composant entre la cuve de stockage (10) et la cuve de pesée intermédiaire (11) dédiées audit premier composant ; et
- un ensemble de premières canalisations (13) capable de transférer un contenu de la cuve de pesée intermédiaire (11) dédiée audit premier composant sélectivement vers chaque cuve de mélange (40-43) ;
pour chaque second composant :
- une cuve de stockage thermo-régulée (20, 30) dédiée audit second composant ; et
- un ensemble de secondes canalisations (21, 31) capable de transférer des quantités dudit second composant à partir de la cuve de stockage (20, 30) dédiée audit second composant sélectivement vers chaque cuve de mélange (40-43) ;
**caractérisée en ce qu'**elle est adaptée pour que les cuves de mélanges (40-43) soient dédiées respectivement à des concentrations différentes du ou d'un des premiers composants dans les mélanges, et **en ce que** les cuves de mélanges sont disposées à des distances d'éloignement respectives par rapport à la cuve de pesée intermédiaire (11) dudit premier composant, de sorte que lesdites distances d'éloignement croissent en fonction desdites concentrations du premier composant dans les mélanges.

2. Unité de fabrication de mélanges titrés selon la revendication 1, dans laquelle l'une au moins ou certaines au moins ou toutes parmi les cuves de stockage (10, 20, 30), la cuve de pesée intermédiaire (11) et les cuves de mélanges (40-43) est ou sont thermo-régulée / thermo-régulées.

3. Unité de fabrication de mélanges titrés selon la revendication 1 ou 2, dans laquelle chaque cuve de mélange (40-43) est montée sur un dispositif de pesée étalonnable (40p-43p), pour déterminer des variations de poids d'un contenu de ladite cuve de mélange.

4. Unité de fabrication de mélanges titrés selon l'une quelconque des revendications précédentes, adaptée pour être installée à bord d'un véhicule pour former une unité mobile de fabrication de mélanges titrés.

5. Unité de fabrication de mélanges titrés selon l'une quelconque des revendications précédentes, comprenant en outre un compartiment équipé étanche de rétention (100), ledit compartiment étant adapté pour contenir des fuites de premier composant et éventuellement pour être ventilé, et chaque cuve de stockage (10) de premier composant, chaque cuve de pesée intermédiaire (11), les premières canalisations (13) et chaque cuve de mélange (40-43) sont contenues dans ledit compartiment.

6. Unité de fabrication de mélanges titrés selon la revendication 5, comprenant en outre au moins un témoin de niveau ou une sonde de niveau (11n, 40n-43n) située à l'intérieur du compartiment étanche équipé de rétention (100) et disposée pour montrer un niveau de remplissage d'une des cuves, ledit témoin de niveau ou une sonde de niveau étant agencée pour être visible à partir d'un poste de supervision situé à l'extérieur dudit compartiment, ou l'unité de fabrication de mélanges titrés comprenant en outre un système vidéo agencé pour visionner ledit témoin de niveau ou une sonde de niveau à partir d'un poste de supervision situé à l'extérieur dudit compartiment.

7. Unité de fabrication de mélanges titrés selon la revendication 5 ou 6, dans laquelle chaque cuve de stockage (20, 30) de second composant est située à l'extérieur du compartiment étanche équipé de rétention (100).

8. Unité de fabrication de mélanges titrés selon l'une quelconque des revendications précédentes, dans laquelle certaines au moins des premières et secondes canalisations (13, 21, 31) sont équipées de systèmes de contrôle thermique, capables de maintenir lesdites canalisations à des températures fixes.

9. Unité de fabrication de mélanges titrés selon l'une quelconque des revendications précédentes, dans laquelle chaque cuve de pesée intermédiaire (11) est munie d'un fond de cuve incliné pour permettre un soutirage complet par gravité d'un contenu de ladite cuve, sans quantité restante dans la cuve.

10. Unité de fabrication de mélanges titrés selon l'une quelconque des revendications précédentes, dans laquelle chaque ensemble de secondes canalisations (21, 31) comprend une pompe dédiée séparément au second composant correspondant, et adaptée pour être contrôlée en fonction de quantités dudit second composant à transférer vers l'une des cuves de mélanges (40-43).

11. Procédé d'utilisation d'une unité fabrication de mélanges titrés, ladite unité fabrication de mélanges titrés étant conforme à l'une quelconque des revendications précédentes.

12. Procédé d'utilisation d'une unité fabrication de mélanges titrés selon la revendication 11, suivant lequel chaque quantité de premier ou second composant qui est transférée entre deux des cuves est mesurée au moins deux fois, par pesées indépendantes des deux cuves, ou par pesée d'une desdites deux cuves et par mesure de la quantité au niveau d'une pompe ayant transféré ladite quantité, ou par pesée d'une desdites deux cuves et par visualisation d'un témoin de niveau ou d'une sonde de niveau pour l'autre desdites deux cuves.

13. Procédé d'utilisation d'une unité fabrication de mélanges titrés selon la revendication 11 ou 12, suivant lequel un premier composant comprend un composé nicotinique, et deux seconds composants comprennent respectivement du propane-1,2-diol et du propane-1,2,3-triol, et le procédé est mis en oeuvre pour fabriquer des pré-mélanges liquides pour cigarettes électroniques.

14. Procédé d'utilisation d'une unité fabrication de mélanges titrés selon la revendication 13, suivant lequel quatre cuves de mélanges (40-43) sont utilisées pour produire séparément des mélanges selon quatre valeurs différentes de titrage en composé nicotinique.

15. Procédé d'utilisation d'une unité fabrication de mélanges titrés selon la revendication 11 ou 12, mis en oeuvre pour fabriquer des mélanges et des pré-mélanges aromatiques liquides pour consommation alimentaire humaine ou animale, ou pour fabriquer des mélanges et des pré-mélanges pharmaceutiques, cosmétiques ou chimiques.

## Patentansprüche

1. Herstellungseinheit für titrierte Gemische zum Mischen mindestens eines ersten flüssigen Bestandteils mit mindestens einem zweiten flüssigen Bestandteil, umfassend:
mehrere Mischtanks (40-43), die jeweils mit je einem Entnahmeauslass (40s-43s) ausgerüstet sind;
für jeden ersten Bestandteil:
- einen für den ersten Bestandteil bestimmten Speichertank (10);
- einen für den ersten Bestandteil bestimmten Zwischenwiegetank (11), der auf einer Zwischenwiegevorrichtung (11p) montiert ist, die dazu ausgelegt ist, Gewichtsveränderungen eines Inhalts des Zwischenwiegetanks zu ermitteln;
- Mittel zum Pumpen in beide Richtungen (12), die dazu eingerichtet sind, etwas vom ersten Bestandteil zwischen dem Speichertank (10) und dem Zwischenwiegetank (11), die für den ersten Bestandteil bestimmt sind, zu übertragen; und
- einen Satz erste Kanäle (13), der in der Lage ist, einen Inhalt des für den ersten Bestandteil bestimmten Zwischenwiegetanks (11) selektiv in Richtung jedes Mischtanks (40-43) zu übertragen;
für jeden zweiten Bestandteil:
- einen für den zweiten Bestandteil bestimmten wärmegeregelten Speichertank (20, 30); und
- einen Satz zweite Kanäle (21, 31), der in der Lage ist, Mengen des zweiten Bestandteils aus dem für den zweiten Bestandteil bestimmten Speichertank (20, 30) selektiv in Richtung jedes Mischtanks (40-43) zu übertragen;
**dadurch gekennzeichnet,**
**dass** sie dazu ausgelegt ist, dass die Mischtanks (40-43) jeweils für unterschiedliche Konzentrationen des ersten Bestandteils oder eines der ersten Bestandteile in den Gemischen bestimmt sind, und
**dadurch gekennzeichnet,**
**dass** die Mischtanks jeweils so in einer Entfernung zum Zwischenwiegetank (11) des ersten Bestandteils angeordnet sind, dass die Entfernung abhängig von den Konzentrationen des ersten Bestandteils in den Gemischen zunimmt.

2. Herstellungseinheit für titrierte Gemische nach Anspruch 1,
bei der mindestens einer oder mindestens einige oder alle der Speichertanks (10, 20, 30), des Zwischenwiegetanks (11) und der Mischtanks (40-43) wärmegeregelt ist bzw. sind.

3. Herstellungseinheit für titrierte Gemische nach Anspruch 1 oder 2,
bei der jeder Mischtank (40-43) auf einer kalibrierbaren Wiegevorrichtung (40p-43p) montiert ist, um Gewichtsveränderungen eines Inhalts des Mischtanks zu ermitteln.

4. Herstellungseinheit für titrierte Gemische nach irgendeinem der vorhergehenden Ansprüche,
die dazu ausgelegt ist, an Bord eines Fahrzeugs eingebaut zu werden, um eine mobile Herstellungseinheit für titrierte Gemische zu bilden.

5. Herstellungseinheit für titrierte Gemische nach irgendeinem der vorhergehenden Ansprüche,
umfassend unter anderem eine angebaute dichte Rückhaltekammer (100), wobei die Kammer dazu ausgelegt ist, Leckagen des ersten Bestandteils aufzunehmen und eventuell entlüftet zu werden, und jeder Speichertank (10) des ersten Bestandteils, jeder Zwischenwiegetank (11), die ersten Kanäle (13) und jeder Mischtank (40-43) sind in der Kammer aufgenommen.

6. Herstellungseinheit für titrierte Gemische nach Anspruch 5,
umfassend unter anderem mindestens eine Füllstandsanzeige oder eine Füllstandssonde (11n, 40n-43n), die sich im Inneren der angebauten dichten Rückhaltekammer (100) befindet und angeordnet ist, um einen Füllstand eines der Tanks anzuzeigen, wobei die Füllstandsanzeige oder eine Füllstandssonde dazu eingerichtet ist, von einer außerhalb der Kammer befindlichen Überwachungsstelle aus sichtbar zu sein oder die Herstellungseinheit für titrierte Gemische unter anderem ein Videosystem umfasst, das dazu eingerichtet ist, die Füllstandsanzeige oder eine Füllstandssonde von einer außerhalb der Kammer befindlichen Überwachungsstelle aus anzusehen.

7. Herstellungseinheit für titrierte Gemische nach Anspruch 5 oder 6,
bei der jeder Speichertank (20, 30) des zweiten Bestandteils sich außerhalb der angebauten dichten Rückhaltekammer (100) befindet.

8. Herstellungseinheit für titrierte Gemische nach irgendeinem der vorhergehenden Ansprüche,
bei der mindestens einige der ersten und der zweiten Kanäle (13, 21, 31) mit Wärmeregelsystemen ausgestattet sind, die in der Lage sind, die Kanäle auf einer festen Temperatur zu halten.

9. Herstellungseinheit für titrierte Gemische nach irgendeinem der vorhergehenden Ansprüche,
bei der jeder Zwischenwiegetank (11) mit einem geneigten Tankboden ausgerüstet ist, um eine vollständige Entnahme eines Inhalts des Tanks durch Erdanziehungskraft zu ermöglichen, ohne dass eine Menge im Tank verbleibt.

10. Herstellungseinheit für titrierte Gemische nach irgendeinem der vorhergehenden Ansprüche,
bei der jeder Satz zweite Kanäle (21, 31) eine Pumpe umfasst, die separat für den entsprechenden zweiten Bestandteil bestimmt ist und die dazu ausgelegt ist, abhängig von den zu einem der Mischtanks (40-43) zu übertragenden Mengen des zweiten Bestandteils gesteuert zu werden.

11. Verfahren zur Verwendung einer Herstellungseinheit für titrierte Gemische, wobei die Herstellungseinheit für titrierte Gemische irgendeinem der vorhergehenden Ansprüche entspricht.

12. Verfahren zur Verwendung einer Herstellungseinheit für titrierte Gemische nach Anspruch 11,
bei dem jede Menge des ersten oder des zweiten Bestandteils, die zwischen zwei der Tanks übertragen wird, mindestens zweimal gemessen wird, und zwar durch unabhängige Wiegevorgänge der zwei Tanks oder durch einen Wiegevorgang eines der zwei Tanks und Messen der Menge auf Höhe einer Pumpe, die die Menge übertragen hat, oder durch einen Wiegevorgang eines der zwei Tanks und Anzeigen einer Füllstandsanzeige oder einer Füllstandssonde für den anderen der zwei Tanks.

13. Verfahren zur Verwendung einer Herstellungseinheit für titrierte Gemische nach Anspruch 11 oder 12,
bei dem ein erster Bestandteil eine Nikotinverbindung umfasst und zwei zweite Bestandteile 1,2-Propandiol bzw. 1,2,3-Propantriol umfassen und das Verfahren angewendet wird, um flüssige Vorgemische für elektronische Zigaretten herzustellen.

14. Verfahren zur Verwendung einer Herstellungseinheit für titrierte Gemische nach Anspruch 13,
bei dem vier Mischtanks (40-43) verwendet werden, um separat Gemische gemäß vier unterschiedlichen Nikotinverbindungstitrierungswerten zu produzieren.

15. Verfahren zur Verwendung einer Herstellungseinheit für titrierte Gemische nach Anspruch 11 oder 12,
das angewendet wird, um flüssige aromatische Gemische und Vorgemische für den menschlichen oder tierischen Lebensmittelkonsum herzustellen oder um pharmazeutische, kosmetische oder chemische Gemische und Vorgemische herzustellen.

## Claims

1. Unit for manufacturing titrated mixtures, for mixing at least one first liquid component with at least one second liquid component, comprising:
a plurality of mixing vessels (40-43) each provided with a respective drawing-off outlet (40s-43s);
for each first component:
- a storage vessel (10) dedicated to said first component;
- an intermediate weighing vessel (11) dedicated to said first component, mounted on an intermediate weighing device (11p), suitable for determining variations in weight of a content of said intermediate weighing vessel;
- double-direction pumping means (12), arranged to transfer some of the first component between the storage vessel (10) and the intermediate weighing vessel (11) both dedicated to the first component; and
- a set of first pipes (13) capable of transferring content from the intermediate weighing vessel (11) dedicated to the first component selectively to each mixing vessel (40-43);
for each second component:
- a heat-regulated storage vessel (20, 30) dedicated to said second component; and
- a set of second pipes (21, 31) capable of transferring quantities of said second component from the storage vessel (20, 30) dedicated to said second component selectively to each mixing vessel (40-43);
**characterised in that** it is suitable for the mixing vessels (40-43) to be dedicated respectively to different concentrations of the or one of the first components in the mixtures, and **in that** the mixing vessels are disposed at respective distances with respect to the intermediate weighing vessel (11) of said first component, so that said distances increase according to said concentrations of the first component in the mixtures.

2. Unit for manufacturing titrated mixtures according to claim 1, in which at least one or at least some or all from the storage vessels (10, 20, 30), the intermediate weighing vessel (11) and the mixing vessels (40-43) is or are heat regulated.

3. Unit for manufacturing titrated mixtures according to claim 1 or claim 2, in which each mixing vessel (40-43) is mounted on a calibratable weighing device (40p-43p), in order to determine variations in weight of a content of said mixing vessel.

4. Unit for manufacturing titrated mixtures according to any of the preceding claims, suitable for being installed on board a vehicle in order to form a mobile unit for manufacturing titrated mixtures.

5. Unit for manufacturing titrated mixtures according to any of the preceding claims, further comprising an equipped sealed retention compartment (100), said compartment being suitable for containing leakages of the first component and optionally for being ventilated, and each storage vessel (10) for the first component, each intermediate weighing vessel (11), the first pipes (13) and each mixing vessel (40-43) are contained in said compartment.

6. Unit for manufacturing titrated mixtures according to claim 5, further comprising at least one level indicator or a level sensor (11n, 40n-43n) situated inside the equipped sealed retention compartment (100) and disposed so as to show a filling level of one of the vessels, said level indicator or a level sensor being arranged so as to be visible from a supervision station situated outside said compartment, or the unit for manufacturing titrated mixtures further comprising a video system arranged to view said level indicator or a level sensor from a supervision station situated outside said compartment.

7. Unit for manufacturing titrated mixtures according to claim 5 or claim 6, in which each storage vessel (20, 30) for the second component is situated outside the equipped sealed retention compartment (100).

8. Unit for manufacturing titrated mixtures according to any of the preceding claims, in which at least some of the first and second pipes (13, 21, 31) are equipped with thermal control systems, capable of maintaining said pipes at fixed temperatures.

9. Unit for manufacturing titrated mixtures according to any of the preceding claims, in which each intermediate weighing vessel (11) is provided with a vessel bottom inclined so as to allow complete drawing off by gravity of a content of said vessel, without any quantity remaining in the vessel.

10. Unit for manufacturing titrated mixtures according to any of the preceding claims, in which each set of second pipes (21, 31) comprises a pump dedicated separately to the second corresponding component, and suitable for being controlled according to quantities of said second component to be transferred to one of the mixing vessels (40-43).

11. Method for using a unit for manufacturing titrated mixtures, said unit for manufacturing titrated mixtures being in accordance with any of the preceding claims.

12. Method for using a unit for manufacturing titrated mixtures according to claim 11, according to which each quantity of first or second component that is transferred between two of the vessels is measured at least twice, by independent weighing of the two vessels, or by weighing one of said two vessels and measuring the quantity at a pump that transferred said quantity, or by weighing one of said two vessels and viewing a level indicator or a level sensor for the other one of said two vessels.

13. Method for using a unit for manufacturing titrated mixtures according to claim 11 or 12, according to which a first component comprises a nicotinic compound, and two second components comprise respectively propane-1,2-diol and propane-1,2,3-triol, and the method is implemented in order to manufacture liquid premixtures for electronic cigarettes.

14. Method for using a unit for manufacturing titrated mixtures according to claim 13, according to which four mixing vessels (40-43) are used to produce separately mixtures according to four different titration values of nicotinic compound.

15. Method for using a unit for manufacturing titrated mixtures according to claim 11 or claim 12, implemented in order to manufacture liquid aromatic mixtures and premixtures for human or animal food consumption, or for manufacturing pharmaceutical, cosmetic or chemical mixtures and premixtures.
